# EUROPEAN PATENT APPLICATION

(11) **EP 2 413 445 A1**
(43) Date of publication of application: **01.02.2012**
(21) Application number: 11171009.1
(22) Date of filing: 22.06.2011
(51) Int. Cl.: H02G 3/14

(54) **Recessed housing**

(30) Priority: 26.07.2010 IT PD20100236
(71) Applicant: Estro-Luxury S.r.l., 18038 Sanremo, Imperia (IT)
(72) Inventor: Aaclasto, Luca, I-18038 Sanremo, IMPERIA (IT)
(74) Representative: Mitola, Marco

(57) **Abstract**

Recessed housing (4), in particular for electric devices, suitable for being flush inserted in an associable panel or attachment wall (8), comprising a hollow, embedded body (12), having a plurality of lateral walls (16) which define a housing compartment (20) for an associable electric device, extending from a rear end (24), insertable in the recess, to a front portion (28), opposite the rear end (24). The housing (4), further comprises a cover plate (32) associable to the front portion (28) of the embedded body (12), so as to close the housing compartment (20), permitting access to a control element (40) of the electric device, such as a push button or switch. Advantageously, the recessed housing (4) comprises magnetic attachment devices (52) positioned between the embedded body (12) and the cover plate (32), on the front portion (28), able to permit the attachment and release of the cover plate (32) from the embedded body (12).

## Description

The present invention relates to a recessed housing, in particular for electric devices.

It is known of in the art to embed electrical devices, such as switches with the relative cables, in walls or panels.

Usually, housings in plastic or metal material are used and inserted in a recess made in the wall or panel, so as to house the electric device. The housings are then closed by covers or cover plates which are attached to the inner housing by means of snap means or screws. The cover plates are shaped so as to permit the passage of the switch and therefore its operation from outside the housing.

The solutions of the prior art present some disadvantages.

In fact, the known solutions are often cumbersome in that the cover plates protrude in relation to the panel or wall which the recessed housing is inserted in.

Moreover, the means of attaching the cover plates to the recessed housings are inconvenient or unattractive to use. In fact, in some cases visible screws are used, ruining the aesthetic appearance and "clean" lines of the cover plate, while in other cases snap means are used, which are inconvenient to dismantle.

As a result, solutions do not exist in the art which are both convenient to use and which have "clean" lines, ensuring for example the insertion of the cover plate perfectly flush with the wall or panel.

The drawbacks and limitations of the prior art are resolved by a recessed housing according to claim 1.

Other embodiments of the recessed housing according to the invention are described in the subsequent claims.

Further characteristics and advantages of the present invention will be evident from the following description of its preferred embodiments, made by way of a non-limiting example, wherein:

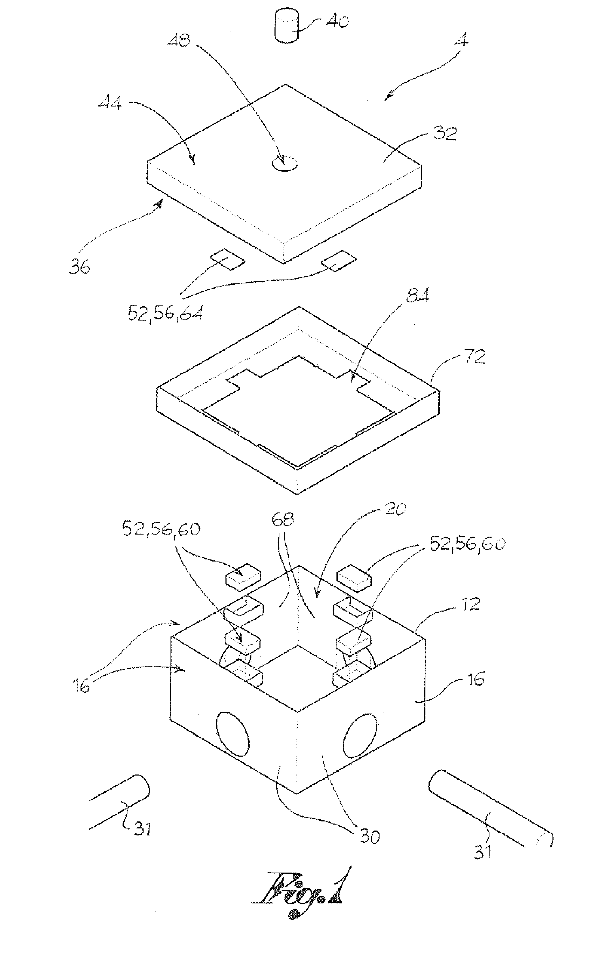

figure 1 shows a perspective view, in separate parts, of a recessed housing according to one embodiment of the present invention;

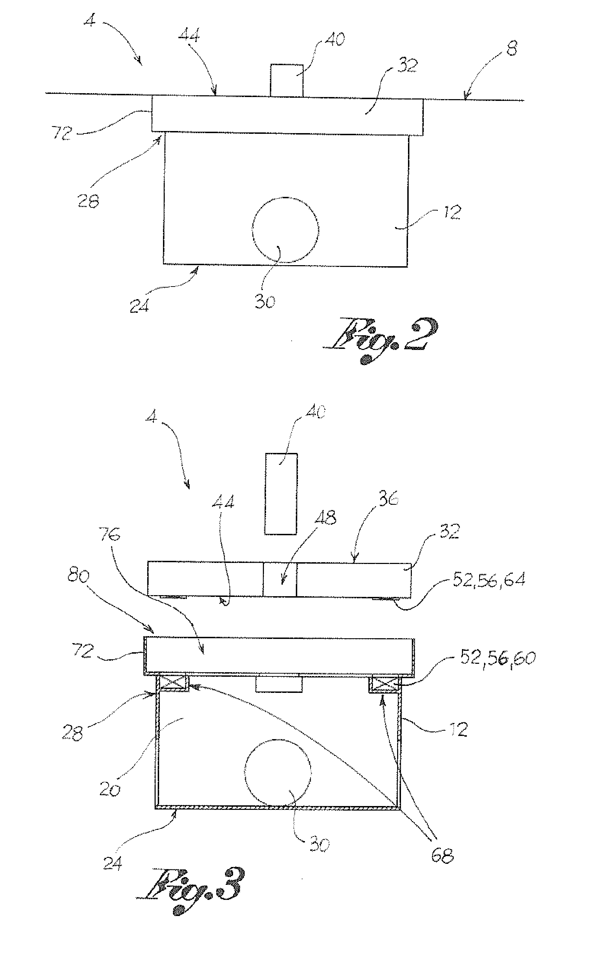

figure 2 shows a lateral view of the housing in figure 1, in an assembled, recessed configuration;

figure 3 shows a lateral view, in separate parts, of the housing in figure 1;

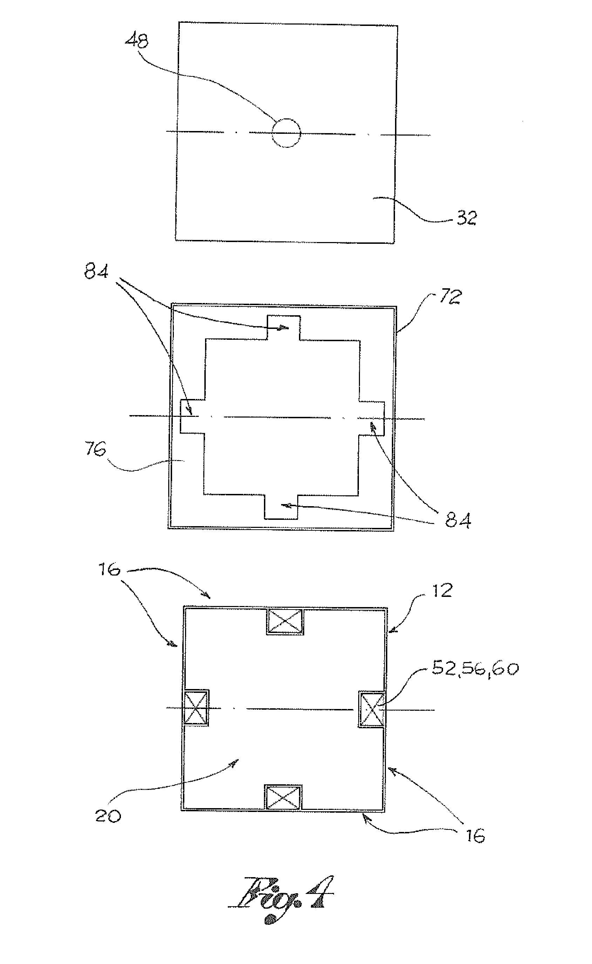

figure 4 shows plan views from above of separate components of the housing in figure 1;

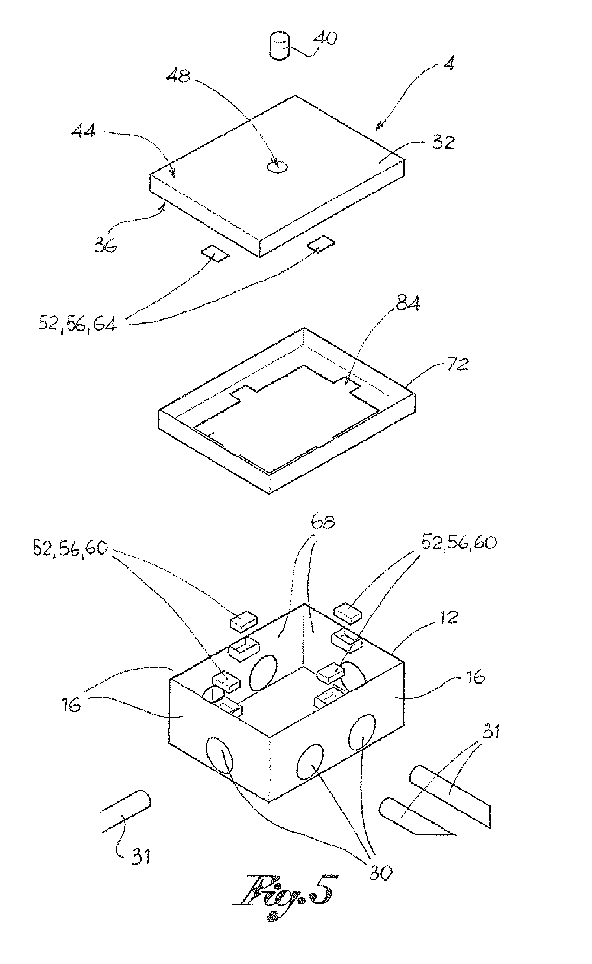

figure 5 shows a perspective view, in separate parts, of a recessed housing according to a further embodiment of the present invention;

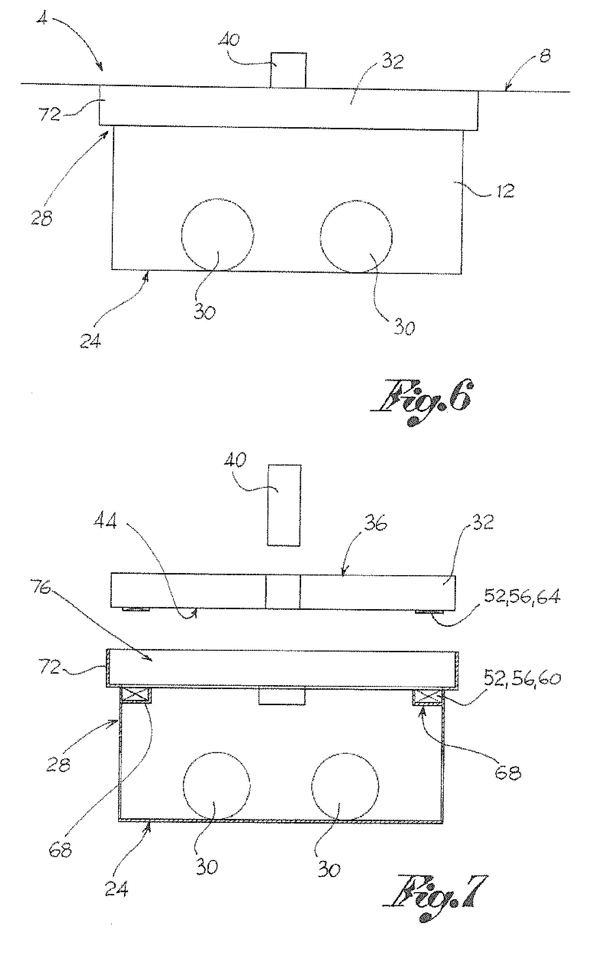

figure 6 shows a lateral view of the housing in figure 5, in an assembled, recessed configuration;

figure 7 shows a lateral view, in separate parts, of the housing in figure 5;

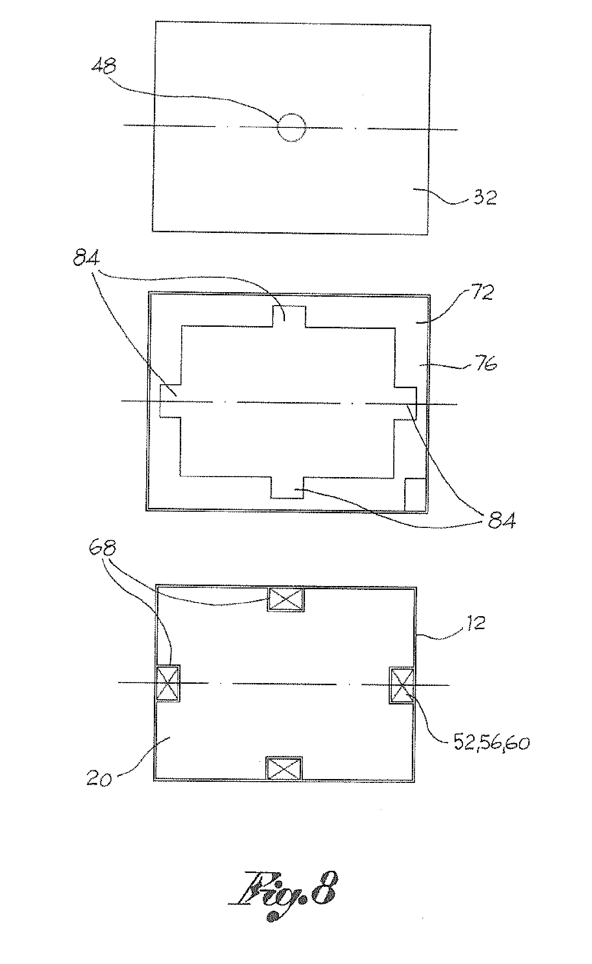

figure 8 shows plan views from above of separate components of the housing in figure 5.

The elements or parts of elements common to the embodiments described below will be indicated using the same reference numerals.

With reference to the aforesaid drawings, reference numeral 4 globally denotes a recessed housing, in particular for electric devices, such as flick switches, push buttons, switches and the like suitable for being flush inserted in an associable panel or attachment wall 8.

The electric devices mentioned above are purely indicative and in no way an exhaustive indication of the possible applications of the present invention.

The recessed housing 4 may be inserted in a wall, typically vertical and in brick, but also in a panel such as wood or plasterboard.

The recessed housing 4 comprises a hollow embedded body 12, having a plurality of lateral walls 16 which define a housing compartment 20 for an associable electric device.

The embedded body 12 may, for example, be a square or rectangular shape; alternatively the embedded body 12 may be any other shape even with lateral walls 16 having a curved contour.

Preferably, the embedded body 12 is made of plastic.

The housing compartment 20 extends from a rear end 24, insertable in the recess, to a front portion 28, opposite the rear end 24.

The rear end 24 may be made of a closed wall or a wall at least partially open for the passage of the electric device or its power supply. Alternatively, the rear end 24 may even be omitted. The rear end 24 may for example be used to anchor the housing compartment to the respective recess in the wall or panel 8, for example by gluing or threaded connection means.

Preferably, the lateral walls 16 and/or the rear end 24 of the embedded body 12 comprise at least one aperture 30 for the passage of power supply cables 31 of the associable electric device, insertable in the housing 4.

The recessed housing 4 further comprises a cover plate 32, associable to the front portion 28 of the embedded body 12 on one of its inner sides 36, so as to close the housing compartment 20, allowing access to a control element 40 of the electric device, such as a push button or switch.

The cover plate 32 is typically square or rectangular but may be of any shape; the inside 36 of the cover plate 32 directly faces the housing compartment 20, while an outer side 44, opposite the inside 36, is visible from the side of the panel or attachment wall 8.

The cover plate 32 is preferably made of plastic material or plaster. Obviously the cover plate can be made in any other material depending on aesthetic requirements; the cover plate 32 may even be made in several parts, such as a base plate, covered if necessary by outer layers in different colours and/or materials.

The control element 40 of the electric device inserted in the housing compartment 20 is typically a push-button or switch, and may be of any shape and size; the cover plate 32 comprises for example at least one hole 48 for the passage of the control element 40 of the electric device. The hole 48 is preferably counter-shaped to the control element 40 so as to conceal the inside of the housing compartment 20 from view.

Alternatively, the control element 40 may also be a touch sensitive plate which does not protrude substantially from the outer side 44 of the cover plate 32.

Advantageously, the recessed housing 4 comprises magnetic attachment means 52 positioned between the embedded body 12 and the cover plate 32, on the front portion 28, able to permit the attachment and release of the cover plate 32 to/from the embedded body 12.

According to one embodiment, the magnetic attachment means 52 comprise strips 56 in magnetic material or material susceptible to being magnetically attracted. The strips 56 may be of any shape and size and be made of magnetic or magnetisable material, so to succumb to the effect of magnetic fields.

In particular, the magnetic attachment means 52 comprise first strips 60 joined to the embedded body 12 on its front portion 28 and second strips 64, joined to the cover plate 32, on its inner side 36.

The first and second strips 60, 64 being reciprocally facing to permit the attachment of the cover plate 32 to the embedded body 12.

The first and second strips 60, 64 may be made by means of magnets having respective opposite polarities directly facing each other so as to exercise a magnetic attraction. It is also possible to use magnetic strips and metallic strips suitable for being attracted by the effect of the field of the magnetic strips.

According to a possible embodiment, the first strips 60 are housed and attached in corresponding pockets 68 joined to the lateral walls 16 of the embedded body 12 at its front portion 28, so as to influence the corresponding second strips 64 joined to the inside 36 of the cover plate 32.

The pockets 68 may for example be shelves overhanging the lateral walls 16 of the embedded body 12, which extend towards the housing compartment 20.

The pockets 68 are preferably positioned at medium points of the lateral walls 16 so as to be in symmetrical positions to said walls. In the case of a quadrangular embedded body, for example square or rectangular, the pockets are arranged in a cross with branches perpendicular to each other.

The second strips 64 may be joined, for example by gluing, to the inside 36 of the cover plate 32, or may be at least partially encompassed in the cover plate itself.

Preferably, the recessed housing 4 comprises, between the cover plate 32 and the embedded body 12, a frame 72 extending perimetrally around the front portion 28 of the embedded body 12 and defining an insertion seat 76 of the cover plate 32.

According to one embodiment, the frame 72 has a bigger profile than the profile of the embedded body 12, so as to form a support to the frame 72 on the embedded body 12 and an undercut in the insertion of the recessed housing 4 inside the respective wall or attachment panel 8.

Preferably the frame 72 is made of plastic.

The insertion seat 76 of the frame 72 is of a depth, measured perpendicular to the cover plate 32, substantially equal to the thickness of the cover plate 32 so that when inserted in the insertion seat 76, the outside 44 of the cover plate 32 is flush with a front edge 80 of said frame 72.

According to one embodiment, the frame 72 has recesses 84 on the associable first and second strips 60, 64 so as to allow direct contact between them in an assembled configuration of the recessed housing 4.

Preferably, the recesses 84 are arranged so as to correspond with the pockets 68 attached to the lateral walls 16 of the embedded body 12. In other words, the recesses 84 are substantially counter-shaped to the pockets 68, so as to permit the adhesion of the first and second strips 60, 64 and the attachment of the cover plate 32 to the front portion 28 of the embedded body 12.

As may be appreciated form the description, the recessed housing according to the invention makes it possible to overcome the drawbacks of the prior art.

In fact, the housing may be entirely embedded in the relevant wall or panel, so as to hold the respective cover plate perfectly flush with said wall or panel.

This way the only element which might project from the cover plate and from the wall or panel is the switch.

Obviously, it is also possible to use a switch which is in turn flush with the cover plate, for example of the touch-sensitive type, or even embedded in the plate itself.

In addition, the attachment system of the plate using magnets ensures easy assembly and dismantling of the plate. Moreover said attachment magnets are completely hidden from view and therefore the attachment means of the cover plate do not interfere in any way with the lines of such plate.

In addition, the presence of holes for the passage of cables ensures neat and safe mounting of the switch inside the recessed housing.

A person skilled in the art may make numerous modifications and variations to the recessed housing described above so as to satisfy contingent and specific requirements while remaining within the sphere of protection of the invention as defined by the following claims.

## Claims

1. Recessed housing (4), in particular for electric devices, such as flick switches, push buttons, switches and the like suitable for being flush inserted in an associable panel or attachment wall (8), comprising
- a hollow, embedded body (12), having a plurality of lateral walls (16) which define a housing compartment (20) for an associable electric device, the housing compartment (20) extending from a rear end (24), insertable in the recess, to a front portion (28), opposite the rear end (24),
- a cover plate (32), associable to the front portion (28) of the embedded body (12) on one of its inner sides (36), so as to close the housing compartment (20), allowing access to a control element (40) of the electric device, such as a push button or switch,
wherein
- the recessed housing (4) comprises magnetic attachment devices (52) positioned between the embedded body (12) and the cover plate (32), on the front portion (28), able to permit the attachment and release of the cover plate (32) from the embedded body (12),
**characterised by** the fact that
- said magnetic attachment devices (52) comprise first strips (60) joined to the embedded body (12) on its front portion (28) and second strips (64), joined to the cover plate (32), on the inside (36), said first and second strips (60,64) being reciprocally facing to permit the attachment of the cover plate (32) to the embedded body (12),
wherein the first strips (60) are housed and attached in corresponding pockets (68) joined to the lateral walls (16) of the embedded body (12) at its front portion (28), so as to influence the corresponding second strips (64) joined to the inside (36) of the cover plate (32).

2. Recessed housing (4) according to claim 1, wherein said magnetic attachment devices (52) comprise strips (56) in magnetic material or material susceptible to being magnetically attracted.

3. Recessed housing (4) according to claim 1 or 2, wherein the second strips (64) are at least partially encompassed in the cover plate (32).

4. Recessed housing (4) according to any of the previous claims comprising, between the cover plate (32) and the embedded body (12), a frame (72) extending perimetrally around the front portion (28) of the embedded body (12) and defining an insertion seat (76) of the cover plate (32), wherein said frame (72) has a bigger profile than the profile of the embedded body (12) so as to form a support to the frame (72) on the embedded body (12) and an undercut in the insertion of the housing (4) inside the respective wall or attachment panel (8).

5. Recessed housing (4) according to claim 4, wherein the insertion seat (76) of the frame (72) is of a depth, measured perpendicular to the cover plate (32), substantially equal to the thickness of the cover plate (32) so that when inserted in the insertion seat (76), an outer side (44) of the cover plate (32), opposite the inner side (36), is flush with a front edge (80) of said frame (72).

6. Recessed housing (4) according to claim 4 or 5, wherein the frame (72) has recesses (84) on the associable first and second strips (60,64) so as to allow direct contact between them in an assembled configuration of the housing (4).

7. Recessed housing (4) according to claim 6, wherein the recesses (84) are positioned so as to correspond with pockets (68) attached to the lateral walls (16) of the embedded body (12).

8. Recessed housing (4) according to any of the previous claims, wherein the cover plate (32) comprises at least one hole (48) for the passage of the control element (40) of the electric device, such as a pushbutton or switch.

9. Recessed housing (4) according to any of the previous claims, wherein the lateral walls (16) and/or the rear end (24) of the embedded body (12) comprise at least one aperture (30) for the passage of power supply cables (31) of the associable electric device, insertable in the housing (4).
